# EUROPEAN PATENT APPLICATION

(11) **EP 3 689 532 A1**
(43) Date of publication of application: **05.08.2020**
(21) Application number: 20155400.3
(22) Date of filing: 04.02.2020
(51) Int. Cl.: B23K 35/22, B23K 35/36, B23K 35/40

(54) **COATED WELDING WIRE**

(30) Priority: 04.02.2019 US 201962800688 P; 21.01.2020 US 202016747975
(71) Applicant: Lincoln Global, Inc., Santa Fe Springs, CA 90670 (US)
(72) Inventor: PROCARIO, John R., Strongsville, Ohio (US); SENGUPTA, Vivek, Toronto, M4T 3A6 (CA); ZHOU, Yijian, Toronto, M2H 1V5 (CA); NARAYANAN, Badri K., Highland Heights, OH 44143 (US)
(74) Representative: Grosse Schumacher Knauer von Hirschhausen

(57) **Abstract**

The disclosed technology generally relates welding wires, and more particularly to coated welding wires. A consumable welding wire comprises a base wire comprising a steel composition and a coating comprising an iron surrounding the base wire, wherein the iron oxide has an oxygen to iron (O/Fe) ratio such that an outer surface of the welding wire has a dark gray to black color.

## Description

### BACKGROUND

### Field of the Invention

The invention relates to a consumable welding wire and to a method of fabricating a consumable welding wire according to the preamble of claim 1 respectively 10. The disclosed technology thus generally relates welding wires, and more particularly to coated welding wires.

### Description of the Related Art

Various welding technologies utilize welding wires that serves as a source of metal. For example, in metal arc welding, an electric arc is created when a voltage is applied between a consumable weld electrode wire, which serves as one electrode that advances towards a workpiece, and the workpiece, which serves as another electrode. The arc melts a tip of the metal wire, thereby producing droplets of the molten metal wire that deposit onto the workpiece to form a weldment or weld bead. Technological and economic demands on welding technologies continue to grow in complexity. For example, the need for higher productivity, e.g., through higher deposition rates, and the need for high bead quality, e.g., through lower contamination, often coexist. Some welding technologies aim to address these competing demands by improving the consumables, e.g. by improving the physical designs and/or compositions of the electrode wires.

Some welding wires have a coating formed around the wire. Some coatings are prone to cracking during a welding process, which can contaminate the resulting weld beam, among other problems. Furthermore, some coatings may limit the deposition rate of the weld. Thus, there is a need for improved coating for welding wires.

### SUMMARY

In an aspect, a consumable welding wire comprises a wire comprising a steel composition and a coating comprising an iron oxide surrounding the core wire, wherein the iron oxide has an oxygen to iron (O/Fe) ratio such that the welding wire has a dark gray to black color.

In another aspect, a method of fabricating a consumable welding wire comprises providing a wire comprising a steel composition and forming a coating comprising an iron oxide surrounding the core wire, wherein the iron oxide has an oxygen to iron (O/Fe) ratio such that the welding wire has a dark gray to black color.

In another aspect, a method of welding comprises providing a consumable welding wire comprising a wire comprising a steel composition and a coating comprising an iron oxide surrounding the core wire, wherein the iron oxide has an oxygen to iron (O/Fe) ratio such that the welding wire has a dark gray to black color. The method additionally comprises forming a weld comprising feeding the welding wire at a wire feeding speed between 50 min/min and 130 in/min.

### BRIEF DESCRIPTION OF THE DRAWINGS

FIGS. 1 and 2 schematically illustrate perspective views of example gas metal arc welding (GMAW) systems.
FIG. 3 schematically illustrates a radial cross section of an elongated flexible cable used in the cable assembly of the GMAW systems of FIGS. 1 and 2.
FIG. 4 schematically illustrates an example submerged arc welding (SAW) system.
FIG. 5 schematically illustrates a perspective view of an example submerged arc welding (SAW) system.
FIG. 6 is an iron-oxygen phase diagram.
FIG. 7 illustrates an experimental comparison of average current employed for different wire feed speeds (WFS) between surface-coated welding wires according to embodiments and comparative welding wires.
FIG. 8 are optical micrographs comparing surface appearances and corrosion performances of welding wires according to embodiments and comparative welding wires after a corrosion test.
FIG. 9 illustrates a flowchart illustrating a method of fabricating the coated welding wires according to embodiments.
FIG. 10 illustrates an experimental comparison of average wafer speeds (WFS) for different target welding current, voltage and electrode stickout between surface- coated welding wires according to embodiments and comparative welding wires.
FIG. 11 is a cross-sectional SEM image of a steel wire with a continuous layer of surface oxide.
FIG. 12 is a cross-sectional SEM image of a steel wire with surface oxide and oil coating.
FIG. 13 is a cross-sectional SEM image of a steel wire with surface oxide and oil coating.
FIG. 14 is a cross-sectional SEM image of a steel wire with surface oxide and oil coating.
FIG. 15 is a cross-sectional SEM image of a steel wire with surface oxide and with another anti-corrosion coating.
FIG. 16 is a cross-sectional SEM image of a steel wire with surface oxide and with another anti-corrosion coating.

### DETAILED DESCRIPTION

To address the above and other needs, consumable welding wires disclosed herein comprises a wire comprising a steel composition and a coating comprising an iron oxide surrounding the core wire, wherein the iron oxide has an oxygen to iron (O/Fe) ratio such that the welding wire has a dark gray to black color. The disclosed welding wires provide various advantages.

Productivity is an important consideration in welding applications and directly related to their economics. Among other parameters, deposition rate in welding is a key index in determining the productivity of the welding process. Some welding wires used in the industry today have limited deposition rates due to a variety of factors. The deposition rate achievable for a given welding wire can depend on, among other factors, the welding process, welding parameters, and consumables used.

The disclosed welding wires according to embodiments advantageously achieve substantially higher deposition rates compared to comparable wires used in the industry today. The wires according to embodiments enable the higher deposition rates in part by having an engineered wire surface that is different from existing wires that have a mixture of metal oxides. This increase in deposition rate can directly lead to a productivity increase. The welding wires according to embodiments can be used in processes such as hot wire gas tungsten arc welding, laser and plasma hot wire processes, etc., to achieve higher deposition rates.

Another advantage the embodiments of the disclosed technology can provide includes reduction of cracking of the coating, e.g., copper cracking that is sometimes observed during welding with copper coated/cladded wire. The welding wires according to embodiments can replace copper cladding formed over some welding wires with a metal oxide coating. Thus, the copper contamination of the weld and copper cracking can be reduced.

Another advantage the embodiments of the disclosed technology can provide includes reduction of corrosion of the welding wires. Welding wires that include mild steel compositions can be prone to corrosion. The corrosion problem can be very severe in uncoated welding wires. The welding wires according to embodiments may provide improved corrosion resistance compared to currently available wires.

Another advantage the embodiments of the disclosed technology can provide includes improvement of the surface appearance of the wire. Currently available steel welding wires have an inconsistent surface appearance (which can be inferred, e.g., by the surface texture or color of the wire). The metal oxides grown on the wires according to embodiments provide a uniform color throughout the wire surface, which can provide an improved appearance of the welding wires.

Another advantage the embodiments of the disclosed technology can provide includes improvement of surface adhesion of coatings formed over the wire surface. Currently available coatings can have a relatively poor adhesion to the wire surface, such that the coating can come off relatively easily, leading to various detrimental effects such as limited feedability and contact tip wear, among other detrimental effects.

### Arc Welding Processes Using Welding Wires Coated with an Oxide of the Metal of the Welding Wire

The consumable welding wires disclosed herein comprising a wire comprising a steel composition and a coating comprising an iron oxide surrounding the core wire can be implemented, without limitation, in various welding processes disclosed herein.

Arc welding generally refers to a process where work pieces of metal are joined with the use of heat from an electric arc. Arc welding can be achieved using a non- consumable electrode or a consumable electrode. Consumable electrodes include coated rods or wires. The welding process used with a non-consumable electrode, e.g., tungsten can be relatively slow. Hence, arc welding processes using consumable electrodes have gained greater popularity in the industry. In processes using a consumable electrode, the electrode or the wire melts to provide an additive metal that fills a gap to form a weld joint that joins two metal workpieces. The welding processes using consumable electrodes include shielded metal arc welding (SMAW), gas metal arc welding (GMAW) or metal inert gas (MIG) welding, flux-cored arc welding (FCAW), metal-cored arc welding (MCAW), and submerged arc welding (SAW), among others. The welding processes using consumable welding electrodes can be carried out in direct current electrode positive (DCEP) mode, direct current electrode negative (DCEN) mode, or alternating current (AC) mode. In a DCEP mode, a direct current is used and the wire is connected to the positive terminal of the power source and the workpiece(s) or plate(s) to be welded is connected to the negative terminal, and vice versa when welding in a DCEN mode. In an AC mode, the wire and the workpiece(s) or plate(s) switches from positive to negative in cycles depending on a frequency. The terminal that serves as a positive electrode may be referred to as an anode and the terminal that serves as a negative electrode may be referred to as a cathode. In the following, various consumable electrode-based welding processes that can be implemented with oxide-coated welding wires according to embodiments are described.

### Gas metal arc welding (GMAW)

Gas metal arc welding (GMAW), sometimes referred to by its subtypes metal inert gas (MIG) welding or metal active gas (MAG) welding, refers to a semi- automatic or automatic arc welding process in which a consumable wire electrode or welding wire and a shielding gas are fed continuously through a welding gun.

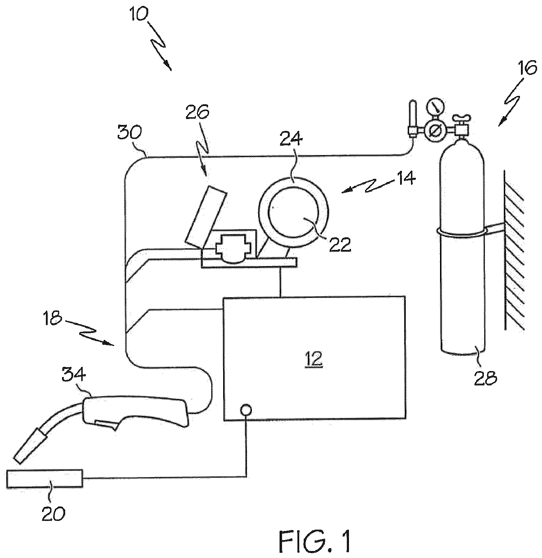

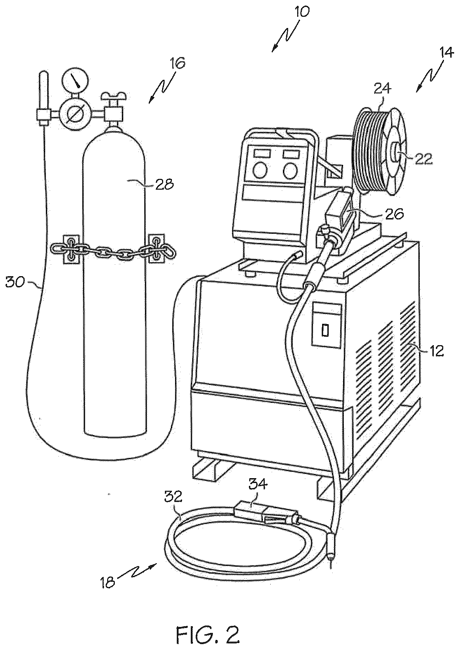

FIGS. 1 and 2 schematically illustrate perspective views of example gas metal arc welding (GMAW) systems 10 configured for oxide-coated welding wires according to embodiments. The GMAW system 10 includes an electrical power source 12, a wire drive assembly 14, a shielding gas supply system 16, and a cable assembly 18 for delivering electrical power, a welding wire in a spool 24 and a shielding gas in a shield gas source 28 configured to be delivered to a workpiece 20 to be welded. The wire drive assembly 14 typically includes a reel stand 22 for carrying the spool 24 including a continuous consumable wire electrode as well as a drive mechanism 26 including one or more drive wheels (not shown) for driving the welding wire from the spool 24 through the cable assembly 18 to the workpiece 20. The shielding gas supply system 16 normally includes a shielding gas source 28 and a gas supply conduit 30 in fluid communication with cable assembly 18. As illustrated in FIG. 2, the cable assembly 18 typically includes an elongated flexible cable 32 attached on one end to the power source 12, the wire drive assembly 14 and the gas supply system 16, and on the other end to a weld gun 34.

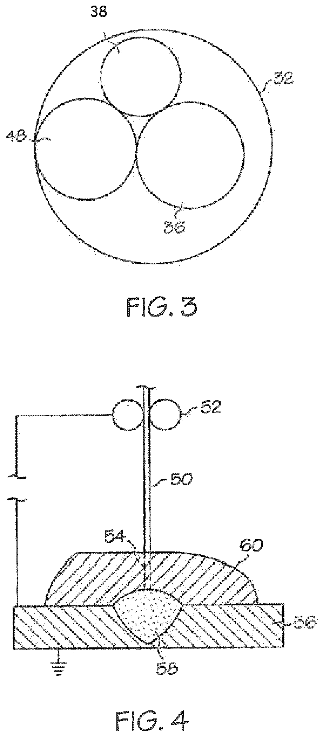

FIG. 3 schematically illustrates a radial cross section of an example of the elongated flexible cable 32 that can be used in the cable assembly 18 of the GMAW systems 10 illustrated in FIGS. 1 and 2. In the example illustrated in FIG. 3, the flexible cable 32 includes an electrical cable 38 for providing welding electrical power to a contact tip of the weld gun 34, a gas conduit 36 for transporting shielding gas, and a flexible sheath 48 for housing the welding wire.

The flexible cable 32 can be at least 10 feet (∼3 m) long, e.g., at least 15 feet (∼4.6 m), at least 20 feet (∼6.1 m), at least 25 feet (∼7.6 m), or at least 30 feet (∼9.1 m) long, so that the electrical power source 12, the wire drive assembly 14 and the shielding gas supply system 16 can remain essentially stationary while the weld gun 34 is moved different locations. In addition, the flexible cable 32 can be made flexible to provide a degree of flexibility in moving and positioning the weld gun 34 in a desired location. For example, the flexible cable 32 can be made sufficiently flexible to make relatively tight bends, such as being coiled into multiple revolutions, as illustrated in FIG. 2.

In order to prevent the welding wire from snagging inside flexible cable 32, the welding wire may be threaded through the interior of the flexible sheath 48. The flexible sheath 48 can be made from a metal wire tightly wound in a spiral having an inside diameter that may be slightly larger than an outside diameter of the welding wire, such that the resulting structure provides a high degree of flexibility in the flexible cable 32 while simultaneously preventing contact between the welding wire and other components inside the flexible cable 32.

Because of the length and flexibility of elongated flexible cable 32, it may take a relatively high amount of force to drive the welding wire from the spool 24 through cable assembly 18 and onto workpiece 20. As such, some welding wires may be coated with a lubricant such as graphite, molybdenum disulfide, etc., for reducing the coefficient of friction between the external surfaces of the welding wire and the internal surfaces the flexible sheath through which it passes.

### Submerged Arc Welding (SAW)

Submerged Arc Welding (SAW) differs from GMAW in that, in SAW, external shielding gas may not be used. Instead, the molten weld and the arc zone are submerged under a blanket of flux, which provides a current path between the electrode and the workpiece being welded, and provides protection for the weldment from the surrounding atmosphere.

FIG. 4 schematically illustrates an example submerged arc welding (SAW) system configured for use with oxide-coated welding wires according to embodiments. The SAW system includes a welding wire 50 driven by drive rollers 52 for forming a weld 58 in a workpiece 56. The tip of the welding wire 50 forms an arc 54, which may be submerged, e.g., entirely submerged, in a layer of a flux 60.

Some SAW systems may provide relatively high deposition rates. For example, depositions rates of over 100 pounds of applied weld metal per hour (45 kg/h) or more are possible with SAW, as compared with 5-10 pounds per hour (∼2-4 kg/h) for some GMAW processes. Typically, horizontal surfaces are welded using SAW processes, since gravity may cause the granular flux to slide-off of non-horizontal surfaces. As such, SAW processes may be more widely used in applications where high deposition rate welds are made in large, horizontally-positioned objects, e.g., in pipe manufacture.

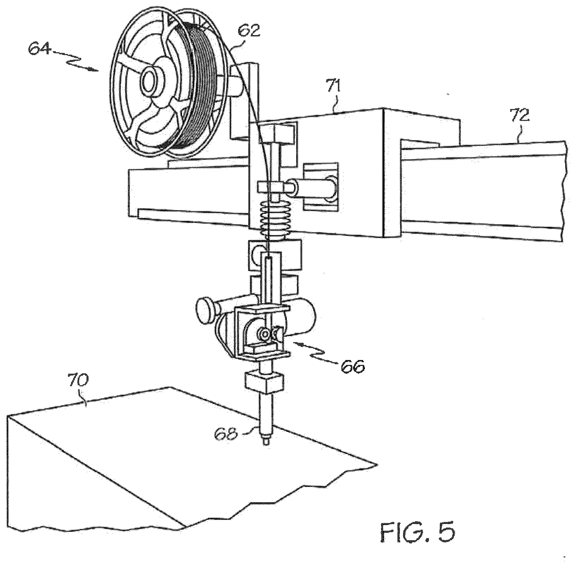

FIG. 5 schematically illustrates a perspective view of an example submerged arc welding (SAW) system that may be suitable for oxide-coated welding wires according to embodiments. In the illustrated system, a welding wire 62 obtained from a supply spool 64 is fed by a supply assembly 66 including drive rollers (not shown) through a weld gun 68 where it forms a weld on a workpiece (not shown) mounted in a stationary position on a table 70. In the illustrated example, the supply spool 64, the supply assembly 66 and the weld gun 68 are mounted in fixed positions on a frame 71, which is moveable along a rail 72, so that a continuous weld can be formed along a length of the workpiece. However, examples are no limited and in other example configurations, the supply spool 64, the supply assembly 66 and the weld gun 68 may be mounted in stationary positions, while the workpiece is moveable along the table 70 to provide a continuous elongated weld. In either case, a suitable flux supply system (not shown) may be provided for automatically covering the site to be welded with flux.

Depending on the application, the SAW system illustrated in FIG. 5 can be stationary, where the entire system may be permanently mounted in a single use location. In other applications, this SAW system can be mobile, where the entire system can be moved between different use locations as, for example, in the welding of bridge girders.

Industrially, the welding wire 62 is supplied to the weld gun 68 either on the supply spool 64, as illustrated in FIG. 5, or in barrels, stems, or reels. The wire supply may be mounted in a fixed position with respect to, and usually relatively close to, the weld gun 68. Similarly, the supply assembly 66 may also usually mounted in a fixed position with respect to, and usually relatively close to, the weld gun 68. As a result of these features, a guidance system such as the flexible sheath 48 in the GMAW system illustrated in FIGS. 1-3 may be omitted. This is because there is essentially no sliding friction between the welding wire 62 and the structural elements transporting this welding wire from the supply spool 64 to the weld gun 68. Therefore, the welding wire for SAW systems may not be provided with solid lubricants typically used in GMAW systems for reducing sliding friction.

As described above, deposition rates in SAW are typically much higher than in GMAW. This is made possible by, e.g., using thicker welding wire and by using higher electrical power compared to GMAW. For example, without limitation, welding wires for SAW may typically be 1/16 inch (about 1.6 mm) or more in diameter while welding wires for GMAW may have a typical diameter of about 1/16 inch (about 1.6 mm) or less. As discussed above, the deposition rate is one of the key performance indices of a consumable electrode. The deposition rate may be correlated to, among other things, the wire feed speed (WFS) during welding, which may be generally measured in inches/min or equivalent units in different measuring systems. Any increase in the deposition rate of the electrode results in an increase in the overall productivity.

### Base Welding Wires to be Coated with an Oxide of the Metal of the Welding Wire

In accordance with various embodiments of the disclosed technology, various advantages described above including an increased deposition rate of a current carrying wire may be realized by forming a metal oxide coating on a surface of the wire. The metal oxide surface over the wire may be formed by applying a surface treatment on a wire. According to embodiments, the oxide-coated welding wires have been implemented in carbon steel submerged arc welding wires. In these wires, the inventors have discovered that a lower average current was needed to obtain a target deposition rate compared to other available non-copper coated welding wires.

The wires according to various embodiments disclosed herein are applicable in general to arc welding processes that utilize a consumable electrode, where the electrode carries welding current. According to embodiments, the consumable wires can be solid wires or cored wires. Solid wires comprise a single piece of metal wire which may be formed, e.g., by drawing down from coil having a larger diameter to the desired diameter. The solid wire can have a copper coating, or a copper-free coating, e.g., as described in U.S. Patent 8901455, the content of which is incorporated by reference herein in its entirety. In addition to the coating, a lubricant can be added to the wire surface which helps with the feeding of the wire through the welding system and also serves as an arc enhancer.

Cored wires according to embodiments are tubular in nature with an internal opening (core) surrounded by a sheath of metal. The core can be filled with a mixture, e.g., a metal mixture in metal-cored arc welding (MCAW) wires or a flux in flux- cored arc welding (FCAW) wires. For MCAW wires, the at least 80-95% of the filling can be a metal mixture, while a remainder can include a flux or other non-metallic ingredients.

In some embodiments, a substantial portion of the metal of the welding wires can include a carbon steel, e.g., mild steel. However, in some other embodiments, the substantial portion of the metal of the welding wires can include other metals and their alloys, e.g., stainless steels of different grades including ferritic, austenitic, martensitic, duplex stainless steels, and precipitation hardenable stainless steels, among others. In yet some other embodiments, a substantial portion of the metal of the welding wires can include aluminum and its alloys, other iron-based alloy systems such as Invar®, Kovar®, nickel and nickel-based superalloys such as Inconel®, copper, brass, bronze, cast iron, zinc, and cadmium.

Typical wire diameters used for submerged arc welding (SAW) can be 1/16 in. (1.6 mm), 1/8 in. (3.2 mm), 5/32 in. (4.0 mm), 3/16 in. (4.8 mm) or more. For GMAW, the wire diameters can be relatively smaller than SAW, typically in the range of 1/16 in. (1.6 mm) or smaller. The FCAW and MCAW wires can have similar wire diameters as those of GMAW wires. The larger diameter of SAW wires can advantageously allow the passage of higher levels of current during welding.

In embodiments where the oxide-coated welding wires according to embodiments are implemented in FCAW and MCAW wires, a suitable welding flux or metal filling can be incorporated.

The disclosed embodiments focus on implementing the coating over a bare wire. However, it will be appreciated that they can be extended to a cladded or galvanized wire. The coating or cladding can be formed of a suitable material. In the following, coating or cladding comprising surface oxides related to carbon steel are disclosed.

### Surface Treatment Processes for Coating Welding Wire with an Oxide of the Metal of the Welding Wire

The surface treatment used on steel wires to form a coating according to embodiments may be referred to as a black oxide conversion coating process or blackening process. In a chemical blackening process, a pre-drawn wire is submerged into a solution to modify its surface through a chemical reaction. The solution used for the coating process may be prepared differently for different welding wires. The type of solution used may depend on the process temperature.

The coating or blackening process for a carbon steel can be obtained through three different ways according to embodiments: A) hot blackening process, B) mid- temperature blackening process, and C) cold blackening process. According to embodiments, hot and mid-temperature blackening processes comprise oxidizing a welding wire. Oxidizing the welding wire comprises chemically oxidizing, e.g., by immersing the welding wire in a solution to chemically oxidize the surface thereof. It will be appreciated that a chemical oxidation process is distinguishable from a thermal oxidation process. In the latter, the surface of a metal is thermally oxidized, e.g., at elevated temperatures, in an oxygen-containing environment.

In hot coating or blackening processes according to embodiments, the coating may be obtained by immersing a welding wire having a steel composition into a solution comprising one or more of metal hydroxide, a metal nitrite or a metal nitrate. According to embodiments, the solution comprises sodium hydroxide in the amount of 50- 60%, 60-70%, 70-80%, 80-90% by weight % or an amount defined by any of these percentages, for instance 60-80%. According to embodiments, the solution additionally comprises one or more of sodium nitrite, sodium nitrate, potassium nitrite and/or potassium nitrate in the amount 10-15%, 15-20%, 20-25%, 25-30%, 30-35%, 34-40%, 40-45% by weight % or an amount defined by any of these percentages, for instance 15-40%, According to embodiments, the black oxide process is carried out in the solution at a temperature of about 120-130°C, 130-140°C, 140-150°C, 150-160°C, 160-170°C, 170-180°C, 180-190°C, 190-200°C, or a temperature in a range defined by any of these values, for instance 130-150°C. According to embodiments, the black oxide process is carried out for 1-10 min., 10-20 min., 20-30 min., 30-40 min., 40-50 min., 50-60 min., or a duration in a range defined by any of these values, for instance about 30 min. The sodium or potassium nitrite or nitrate serves as an oxidizing agent which oxidizes the surface of the welding wire or converts the surface of the welding wire into an oxide.

It will be appreciated that blackening processes are not limited to chemical blackening processes using a solution. In some embodiments, thermal blackening or oxidation may be employed. Thermal blackening or oxidation of steel wires may be achieved by convection heating or induction heating in an oxidizing environment. For example, thermal blackening or oxidation can be achieved by heating a wire in an oven or furnace at 100-500°C, 500-1000°C, 1000-400°C, or at a temperature in a range defined by any of these values. The oxidizing environment may be provided by heating in air or a suitable oxidizing atmosphere, or using an oxidizer such as potassium nitrate or sodium nitrate.

In various embodiments, the chemical or thermal blackening process is implemented such that the oxide formed over the surface of the welding wire predominantly includes magnetite (Fe₃O₄). In some other embodiments, however, the process is implemented such that the oxide formed over the surface of the welding wire predominantly includes a mixture of magnetite (Fe₃O₄) and hematite (Fe₂O₃). According to embodiments, the oxide formed over the surface can include Fe₃O₄ and/or Fe₂O₃ in the amount of 10-20%, 20-30%, 30-40%, 40-50%, 50-60%, 60-70%, 70-80%, 80-90% or 90-99% by weight %, or a percentage defined by any of these values.

In some embodiments, because the oxide layer formed can be permeable, the welding wire may be immersed in hot oil or a corrosion inhibitor solution afterward for corrosion protection.

The mid-temperature coating or blackening processes may be similar to the hot oxide process except that the process may be performed at a lower temperature compared to the hot black oxide treatment, e.g., a temperature of about 90-95°C, 95-100°C, 100-105°C, 105-110°C, 110-115°C, 115-120°C, or a temperature in a range defined by any of these values, for instance 104-118°C.

The cold temperature coating or blackening process is not a conversion coating or an oxidation process. Instead, the cold temperature blackening process includes application of a coating comprising copper and selenium, e.g., copper selenium, over the surface of a steel wire. For stainless steel wires, an example solution used for the cold temperature black oxide process includes a mixture comprising one or more of hydrogen chloride, selenous acid, copper, phosphoric acid and water. The blackening time can be around 1-2 min., 2-3 min., 3-4 min., 4-5 min., 5-6 min., 6-7 min., 7-8 min., 8-9 min., 9-10 min., or a time in a range defined by any of these values, for instance 2-5 min.

For welding wires comprising aluminum and aluminum alloys, an example solution for a blackening process or for forming a coating includes a mixture comprising one or more of sodium hydroxide, zinc oxide, and water. The blackening time in this case can be about 10-30 sec., 30-60 sec., 60-90 sec., 90-120 sec., 120-150 sec., or a duration in a range defined by any of these values, for instance 30 sec.-2 min. For welding wires comprising copper or copper alloys, an example solution for a blackening process or for forming a coating includes sodium chlorite and water. The blackening time in this case can be about 1-5 min., 5-10 min., 10-15 min., 15-20 min, 20-25 min., 25-30 min., or a duration in a range defined by any of these values, for instance 5 - 20 min. For welding wires comprising zinc or zinc alloys, an example solution for a blackening process or for forming a coating includes sodium hydroxide and water. For welding wires comprising nickel or nickel alloys, an example solution for a blackening process or for forming a coating includes fluoroboric acid and water and the blackening time is about 1-3 min., 3-6 min., 6-10 min., or a duration in a range defined by any of these values, for instance 1-3 min. For welding wires comprising cadmium or its alloys, an example solution for a blackening process or for forming a coating includes a water solution of nickel and/or antimony, with a blackening time of about 1-3 min., 3-6 min., 6-10 min., or a duration in a range defined by any of these values, for instance 2 to 5 min. For cast irons, a blackening process similar to the ones used for carbon steels can be used.

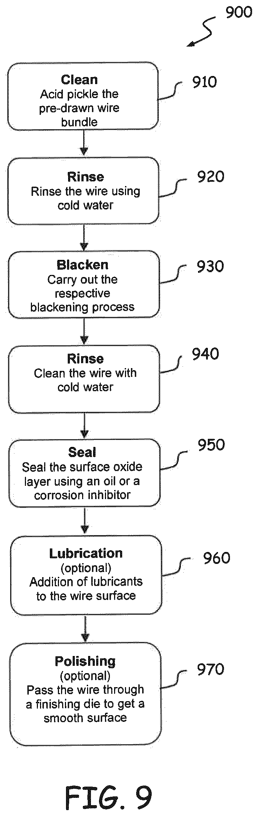

FIG. 9 is a flowchart of an example method 900 for coating or blackening the surface of a welding wire. Initially, the wire to be treated is drawn down to a desired diameter as described above. The method 900 includes cleaning 910 the welding wire having the desired diameter, which can include acid pickling. After cleaning 910, the method 900 proceeds to rinsing 920 the wire in water, e.g., cold water at a temperature below room temperature. After rinsing 920, the method proceeds to coating or blackening 930 using one of the blackening processes described above. For example, for a carbon steel wire, a hot blackening process can be utilized, in which the cleaned wire is dipped in a solution comprising 60-80 weight % sodium hydroxide and 15-40 weight % sodium/potassium nitrite/nitrate at a temperature of about 130-150°C, for about 30 min. After blackening 930, the method proceeds to removing the wire bundle and rinsing 940 with water, e.g., cold water at a temperature below room temperature. After rinsing 940, the method proceeds to sealing 950 the wire surface, e.g., using an oil or a corrosion inhibitor to suppress corrosion of the wire. Optionally, the method proceeds to lubricating 960 the welding wire by applying one or more lubricants to the processed wire surface to further enhance the feedability of the wire through the welding gun. The lubricants that can be used for various welding wires are described, e.g., in U.S. Patent No. 8,901,455 and U.S. Patent No. 8,395,071, the contents of which are incorporated herein in their entireties. Further optionally, the method includes polishing 970 the wire by passing through a finishing die.

### Composition and Structure of Coating Formed by Surface Treatment of Welding Wires

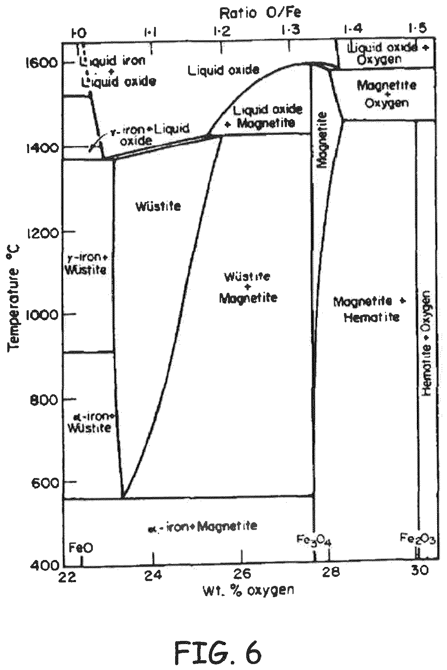

FIG. 6 is an iron-oxygen phase diagram. Iron oxides have O²⁻ anion lattices and Fe cations occupying tetrahedral and octahedral interstices. Wüstite (Fe₁₋ₓO or FeO) has a rock salt structure, where the Fe²⁺ is present in the octahedral sites, and is often non-stoichiometric due to Fe cation deficiency. Under oxidizing conditions, hematite (Fe₂O₃) maybe be formed, which has a conundrum structure. The Fe³⁺ is present in the octahedral sites. Magnetite (Fe₃O₄) has an (inverse) spinel structure. The inverse spinel structure has a B(AB)O₄ structure, where, B cations are in the tetrahedral sites, and (AB) ions occupy octahedral sites. For Fe₃O₄, B is Fe³⁺, and A is Fe²⁺. The inverse spinel structure of magnetite makes it ferrimagnetic in nature. The melting point of the various oxides can be noted from the iron-oxygen phase diagram. Magnetite undergoes a transition known as Verwey transition at around 125 K, where, the electrical conductivity of the oxide increases by two orders of magnitude.

The surfaces of the welding wires comprising iron/steel formed by surface treatments according to embodiments can include a mixture of magnetite and residual iron at room temperature under some circumstances, or a mixture of magnetite and hematite under some other circumstances, depending upon, e.g., the O/Fe ratio during the processing stage. For example, increasingly higher O/Fe ratio (e.g., 1.37 or above) can lead to increasingly higher hematite formation. Eventually, at very high O/Fe ratio, e.g., above 1.5, thus formed surface oxide can consist essentially of hematite. As noted from the Fe-O phase diagram illustrated in FIG. 6, when heated above 570°C, mixtures of iron and magnetite can transform into wüstite and iron, only wüstite or wüstite and magnetite. At higher O/Fe ratios, magnetite and hematite formed at lower temperatures can continue to exist at a higher temperature.

According to embodiments, the iron oxide in the coating of the welding wire has an O/Fe atomic ratio of 1.3 to 1.35, 1.35 to 1.4, 1.4 to 1.45, 1.45 to 1.5, or in a range defined by any of these values.

When the coating formed on the surfaces of the welding wires comprises an iron oxide, the thickness can be 0.5-1 micron, 1-2 microns, 2-3 microns, 3-4 microns and 4-5 microns or a thickness in a range defined by any of these values, for instance 1-3 microns. Alternatively, the coating can be about 0.05-0.10 %, 0.10-0.15%, 0.15-0.20%, 0.20-0.25%, 0.25-0.30% or a value in a range defined by any of these values, on the basis of the total weight of the welding wire, for instance 0.080% - 0.267%. These surface oxides thus present can affect the welding characteristics of the steel wire, as discussed below.

### Electrical Conductivity of Coatings Formed by Surface Treatment of Welding Wires

The surface oxides have a lower electrical conductivity relative to the steel wire. The electrical conductivity of magnetite remains relatively constant from room temperature to its melting point. For example, it has been reported that the electrical conductivity of a single crystal of magnetite at room temperature is about 250 Siemens/cm (S/cm), and drops slightly to about 200 S/cm at around 800 K and remains constant above that up to about 1600 K. It has also been reported that the electrical conductivity of the wüstite phase can vary depending on O/Fe ratios. For example, the electrical conductivity of a wüstite phase with an O/Fe ratio of 1.1 can vary within 170-200 S/cm between 1073 K to 1573 K. However, it is interesting to note that by changing the O/Fe ratio to 1.06, the electrical conductivity of the wüstite phase can be changed to be within 90-140 S/cm between 1073 K and 1573 K. Generally, many iron oxides may maintain the same order of magnitude of electrical conductivity for a large temperature range. In comparison, the electrical conductivity of AISI 1008 steel changes from ∼3 x 10⁴ S/cm at room temperature to ∼0.7 x 10⁴ S/cm at around 1273 K. Carbon steels can thus generally have electrical conductivities that are two orders of magnitude higher than those of iron oxides. Thus, advantageously, the coating formed on the wires according to embodiments have an electrical resistivity that is higher than that of the core wire itself by 5x, 10x, 50x, 100x, 500x, or by a value in a range defined by any of these values, according to embodiments.

### Heat Transfer in Arc Welding Using Coated Welding Wires

The deposition rate of the wire can be correlated with the melting rate of a welding wire. The deposition rate is often inferred from the wire feed speed. In turn, the melting rate of the welding wire can be affected by heat transfer characteristics to and within the wire.

When the wire is connected to a positive terminal, the dissipated heat from the wire can include the following components: anode fall voltage, joule heating in the electrode stickout portion, radiation from the arc, and heat dissipated due to the contact resistance at the point of contact between the wire and the contact tip.

The anode fall region is the region which attracts electrons. The electrons transfer their thermal and kinetic energy to the anode. The voltage fall associated with this region is called the anode fall voltage. The joule heating of the wire is given by I²R, where, I is the welding current and R is the resistance of the electrode stickout portion, which depends on the material and physical dimensions of the wire. Additional sources of heat can include the contact resistance, from which heat can be generated due to current flow from the contact tip to the wire surface. When the wire is connected to the negative terminal, it is referred to as a cathode, which serves as a source of electrons.

During welding using consumable electrodes, a significant amount of metal vapor from the anode surface may be present near the electrodes. In a copper-coated steel wire, the dominant elements in the vapor can include, e.g., copper, iron, manganese, etc. The heat loss from the wire will be due to different phenomena such as evaporative loss from the droplets, thermal radiation and thermal convection from the wire to the surrounding.

### Deposition Rate of Welding Wires Coated with an Oxide of the Metal of the Welding Wire

The decreased electrical conductivity on the surface of the wire can lead to an increased contact resistance between the wire and the contact tip at the point of contact. This increased contact resistance can change the temperature distribution in the electrode stickout portion and, as result, increase the heating in the wire. The increased heat generation in turn resulted in increased melting, particularly at higher currents, thereby advantageously increasing the deposition rate.

In arc welding, the droplet temperatures can reach as high as ∼3000 K. Without being bound to any theory, hematite (Fe₂O₃) that may be present in the mixture of surface oxides may decompose into magnetite (Fe₃O₄) and oxygen above ∼1450 K according to the phase diagram shown in FIG. 6. This free available oxygen can evaporate and get ionized in the near anode regions, in addition to other elements from the wire such as Fe and Mn. Advantageously, this oxygen can then increase the anode fall voltage due to its higher ionization potential. This increased anode fall voltage can in turn increase the heat going into the anode and hence, increase the melting rate of the wire. However, other oxide forms of iron oxide such as FeO, Fe₃O₄ may not decompose as easily at these temperatures, and may simply vaporize from the droplet surface as oxides and later breakdown in the arc.

### Appearance of Welding Wires Coated with an Oxide of the Metal of the Welding Wire

In the welding wires according to embodiments, appearance is related to the uniformity of surface color on the wire throughout its volume. The oxides of iron have a distinct color. Magnetite and wüstite are black in color, while hematite is red in color. A consistent substantially black coating can be obtained over the wire surface using various processes described before. The black color can enhance its aesthetics. The black color according to embodiments are distinguishable from some existing processes to provide a black surface finish.

### Corrosion Inhibition of Welding Wires Coated with an Oxide of the Metal of the Welding Wires

The coating formed on the welding wire according to embodiments can advantageously inhibit corrosion of the underlying wire. In some embodiments, to further enhance the corrosion resistance, an oil or corrosion inhibitor may be applied to various coatings described herein. The inventors have found that the oil or corrosion inhibitor can effectively seal pores formed in some coatings, e.g., a coating comprising iron oxide(s) according to embodiments, to further improve the corrosion resistance of the underlying welding wires. The pores formed in the coatings may improve an affinity for an oil or corrosion inhibitor applied to the coating, such that the resulting coating having applied thereon an oil or corrosion inhibitor can further enhance the corrosion resistance of the underlying wire.

### Experimental Examples

In the following, coated welding wires fabricated according to embodiments are experimentally characterized, and compared to coated welding wires fabricated according to known processes. TABLE 1 lists different wires used to characterize the different welding wires.

**TABLE 1. Wires Tested**

| **Wires** | **Wire Material** | **Surface Treatment** |
|---|---|---|
| A | Carbon steel | A surface treatment according to US Patent No. 8901455 |
| B | Carbon steel | A black oxide surface treatment, wire sealed with an oil |
| C | Carbon steel | A black oxide surface treatment, wire sealed with a corrosion inhibitor |

Referring to TABLE 1, two types of black oxide-coated wires (wires B & were fabricated according to embodiments and tested. Wire A is a non-copper coated SAW wire manufactured as a comparative example according methods disclosed in US Patent 8901455.

TABLE 2 shows the experimental matrix used to compare wires A and B. As shown in TABLE 2, wires A and B were tested using Lincoln AC/DC 1000 power source in DCEP constant voltage mode. In this mode, an input target wire feed speed (WFS) and voltage is given to the power source, and the machine adjusts the current accordingly to maintain the target WFS during welding. A total of twenty-one welds were made using both the wires. The target WFS used were: 50 in./min, 80 in./min, and 110 in./min, target voltage was set at 28 V, 36 V, and 40 V, respectively. Two different contact piece to workpiece distances (CTWD), 1.25 in. and 3 in., were used for the experiments. The torch travel speed was kept same at 25 in./min for all measurements. All the welds were stringer bead on plate with no oscillation. The flux used for all the experiments was Lincolnweld 761 flux.

**TABLE 2. Experimental Matrix**

| **Wires Tested (Flux)** | **Target WFS (in./min)** | **Voltage (V)** | **Travel Speed (in./min)** | **CTWD (in.)** |
|---|---|---|---|---|
| Wire A and Wire B | 110 | 40 | 25 | 3 |
| | 110 | 40 | 25 | 1.25 |
| (Lincolnweld® 761® Welding Flux) | 80 | 36 | 25 | 3 |
| | 80 | 36 | 25 | 1.25 |
| | 50 | 28 | 25 | 3 |
| | 50 | 28 | 25 | 1.25 |

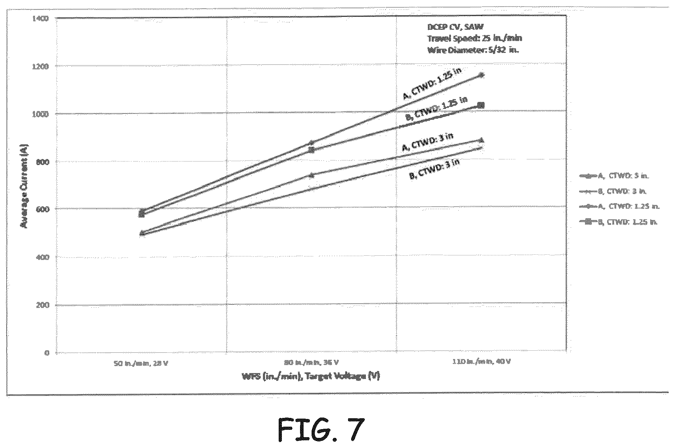

TABLE 3 shows a summary of current signals observed for the measurements made using the experimental matrix shown in TABLE 2. As shown in TABLE 3, the instantaneous welding current was recorded using an arc tracer which was connected to the machines before the welds. FIG. 7 shows a graph plotting the results summarized in TABLE 3, on the basis of average current in steady state (excluding the welding start and stop current) required to achieve a set target WFS. As shown wire B attains a set target WFS at a lower average current for both CTWD. The results show that wire B having oxide-coated surface according to embodiments has an increased deposition rate compared to a wire A made using existing technology. The data obtained for TABLE 3 and FIG. 7 is from single tests and some multiple tests, where some the multiple tests were done to nullify the effect of any momentary fluctuations observed in the current readings observed during the tests.

**TABLE 3. Average Current During Welding**

| **Target WFS (in./min), Target Voltage (V)** | **Average Current Observed During Welding (Amps)** | | | |
|---|---|---|---|---|
| | **Wire A, CTWD: 3 in.** | **Wire B, CTWD: 3 in.** | **Wire A, CTWD: 1.25 in.** | **Wire B, CTWD: 1.25 in.** |
| 50 in./min, 28 V | 503 (single test) | 492 (single test) | 591 (single test) | 575(single test) |
| 80 in./min, 36 V | 739 (average of two tests) | 680 (average of two tests) | 873 (average of two tests) | 842 (average of three tests) |
| 110 in./min, 40 V | 883 (average of four tests) | 847 (average of two tests) | 1152 (single test) | 1024 (single test) |

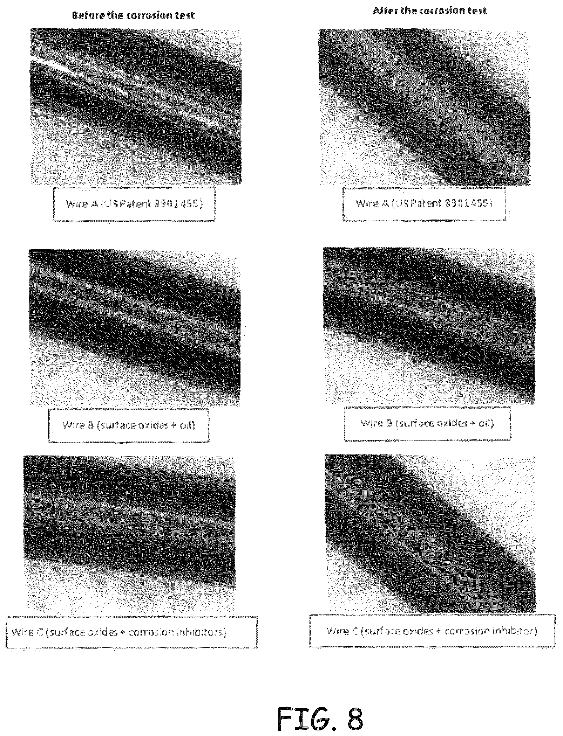

Another advantage observed in the welding wires manufactured according to embodiments is the improved surface appearance, as illustrated in FIG. 8. The surface appearance of the wire is closely related to the surface color distribution of the wire. Wire A (top left) has been found to have an inconsistent surface color, which may be related to non- uniform distribution of the coating. In contrast, Wires B (middle left) and C (bottom left) show very uniform and continuous color without any blotches as observed in wire A. The presence of magnetite and wustite can be attributed to a black/dark grey color. FIG. 8 captures the differences in the surface appearance/color of the wires A, B, and C. Both wires B and C show more uniform color distribution throughout the lengths of the wires, compared to wire A.

Another advantage observed in the welding wires manufactured according to embodiments is the improved corrosion resistance, which was confirmed by an experiment performed on wires A, B and C as illustrated in FIG. 8. The images of wires A (top left), B (middle left) and C (bottom left) were taken before a corrosion acceleration test and the wire, and the corresponding images of wires A (top right), B (middle right) and C (bottom right) were taken after a corrosion acceleration test. The corrosion acceleration tests were done using a humidity chamber, in which the samples were exposed for 90 min. at 50°C under 80% relative humidity condition. As illustrated, wires B and C showed much less corrosion compared to wire A. The wires B and C coated with an oxide according to embodiments have been shown to clearly outperform the wire A.

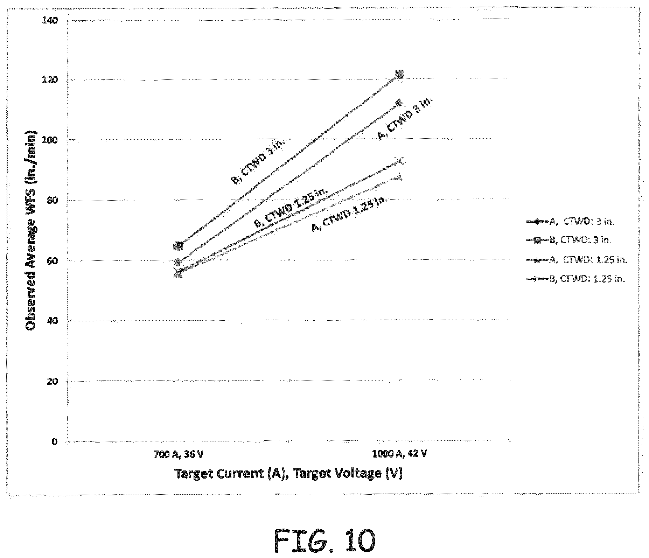

FIGS. 10 illustrates an experimental comparison of average wafer speeds (WFS) for different target welding current, voltage and electrode stickout between surface-coated welding wires B according to embodiments and comparative welding wires A (prepared according to method disclosed in U.S. Patent No. 8901455). All the welds were performed in DCEP, CV mode with Lincolnweld® 761® flux. The experimental matrix used to obtain the results of FIG. 10 are shown in TABLE 4.

**TABLE 4. Experimental Matrix Under Constant Current Weld Mode.**

| **Wires Tested (Flux)** | **Target Current (A)** | **Target Voltage (V)** | **Travel Speed (in./min)** | **CTWD (in.)** |
|---|---|---|---|---|
| Wire A and Wire B (Lincolnweld® 761® Welding Flux) | 700 | 36 | 25 | 1.25 |
| | 1000 | 42 | 25 | 1.25 |
| | 700 | 36 | 25 | 3 |
| | 1000 | 42 | 25 | 3 |

Referring to FIG. 10 and TABLE 4, the experiment was performed using a different Lincoln AC/DC 1000 power source welding in DCEP constant current (CC) mode. In this weld mode, the machine supplies a constant current and voltage to the welding wire and the machine controls the WFS to maintain a constant average current. Eight successful welds were made in DCEP CC (Program No. 48). The current used was 700 A with 36 V and 1000 A with 42 V for both types of wires. The travel speed was kept constant at 25 in./min. The welding flux used was Lincolnweld® 761® flux (Lot No.: 15456057). All welds were stringer bead on plate with no oscillation. This set of experiments was conducted to confirm the validity of the observations obtained from the first set of experiments (FIG. 7). The data acquisition of current, voltage and WFS was recorded at 60000 Hz using the inbuilt data acquisition system of the machine using Weld View software. The average WFS were taken from the data acquisition after eliminating the first second (60000 data points). These average WFS values was plotted against the welding current for both the wires and analyzed.

The results shown in FIG. 10 is also shown in TABLE 5 below, which shows the observed average WFS for a set target welding current and voltage for wire B with wire A in DCEP CC mode. The results shown in FIG. 10 and TABLE 5. clearly demonstrate that the WFS observed with wire B was higher than that with wire A. This difference is especially significant with the longer stickout (3 in.), where the WFS is -9% higher with wire B. This increased WFS for the same current shows that wire B gives a higher deposition rate compared to wire A under similar welding conditions, thus, is in accord with the findings from the first set of experiments (TABLE 2, FIG. 7).

**TABLE 5. WFS for at Set Target Current**

| **Target Current, Target Voltage (V)** | **Observed Average WFS (in./min)** | | | |
|---|---|---|---|---|
| | **Wire A, CTWD: 3 in.** | **Wire B, CTWD: 3 in.** | **Wire A, CTWD: 1.25 in.** | **Wire B, CTWD: 1.25 in.** |
| 700 A, 36 V | 59.2 | 64.6 | 55.5 | 56.1 |
| 1000 A, 42 V | 111.9 | 121.5 | 87.6 | 92.6 |

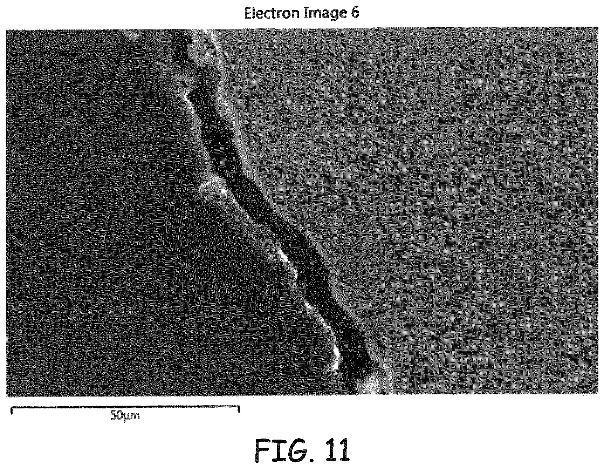

Scanning Electron Microscopy (SEM) analysis of cross-sections of welding wires coated with surface oxides was performed. The surface oxides were found to etch differently than the steel substrate, as described herein. FIG. 11 is a representative cross-sectional SEM image of a steel wire coated with a surface oxide according to embodiments. The continuous layer of the surface oxide is shown.

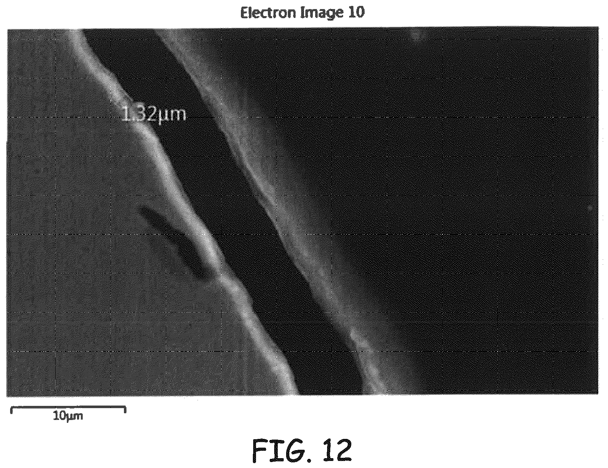

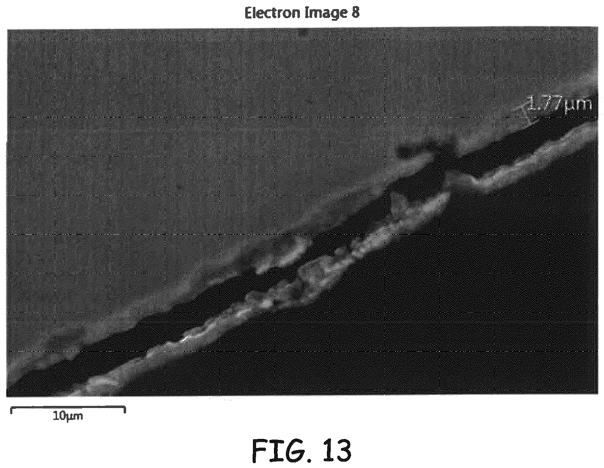

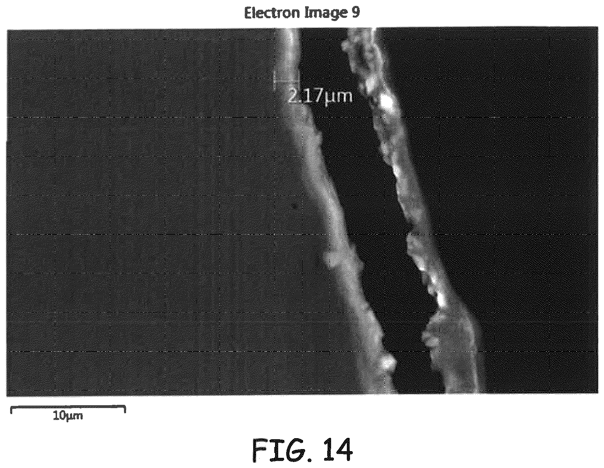

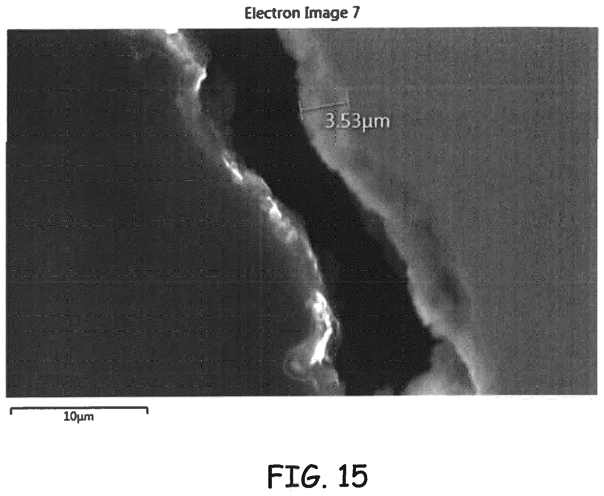

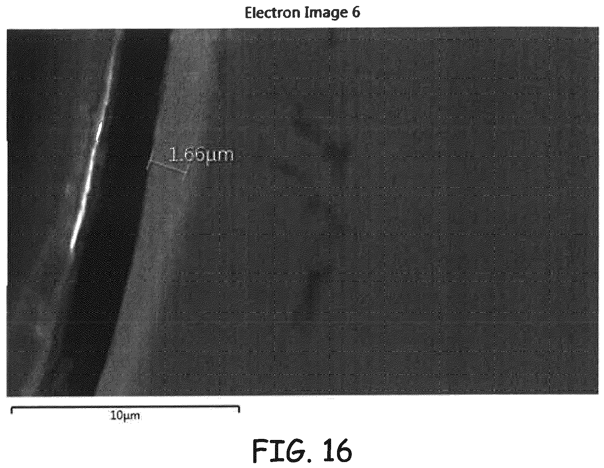

The thickness of the surface oxides observed were found to be about 1 - 4 µm, depending upon the exposure of the original bare material to the black oxide treatment. This is illustrated by SEM images of the wire cross sections with surface oxides in FIGS. 12 - 16 and summarized in TABLE 6. FIG. 12 is a cross-sectional SEM image of a steel wire with surface oxide and oil coating. The thickness measured was on the range of ∼1.3 µm. FIG. 13 is a cross-sectional SEM image of a steel wire with surface oxide and oil coating. The thickness measured was on the range of ∼1.8 µm. FIG. 14 is a cross-sectional SEM image of a steel wire with surface oxide and oil coating. The thickness measured was on the range of ∼2.2 µm. FIG. 15 is a cross-sectional SEM image of a steel wire with surface oxide and with another anti-corrosion coating. The thickness measured was on the range of ∼3.5 µm. FIG. 16 is a cross-sectional SEM image of a steel wire with surface oxide and with another anti-corrosion coating. The thickness measured was on the range of ∼1.7 µm.

**TABLE 6. Thickness of Surface Oxide Coating**

| **Sample No.** | **Typical surface oxide layer thickness (µm)** |
|---|---|
| 1 | 1.32 |
| 2 | 1.77 |
| 3 | 2.17 |
| 4 | 3.53 |
| 5 | 1.66 |

Based on the measured thickness of the surface oxides, represented in FIGS. 12-16 and TABLE 6, the mass of the surface oxides can be estimated for a known length and density, to obtain information about phase(s) present in the oxide coating according to embodiments. Wüstite has a known density of 5.99 g/cc, whereas, magnetite has a known density of 4.87 g/cc. Based on the known densities and the measurements, estimations of the mass of the surface oxide for a wire cut length of 1 cm was carried out for two densities 4.87 g/cc and 5.99 g/cc and for thickness range of 1.32 to 3.53 µm. These estimations are presented in TABLES 6 and 7. The estimated mass was found to be ranging from 0.80 mg to 2.65 mg. The estimated values of the mass of surface oxide is summarized in TABLE 7. For the same length of 1 cm and 4 mm diameter, a steel wire cut length will have an estimated mass of 0.99 g. These estimations show that the observed mass/weight percent of the oxide to the steel base (wire) is in the range of 0.080% - 0.267%.

**TABLE 6. Estimated Mass of Surface Oxide Based on 4.87 g/cc Density Assumption**

| | | |
|---|---|---|
| Density of oxide | 4.87 | (g/cc) |
| Assumed Length of oxide | 1 | (cm) |
| Density of steel | 7.86 | (g/cc) |
| Assumed Length of steel | 1 | (cm) |
| Estimated volume of the steel wire with 1 cm length and 4 mm diameter | 0.1256 | (cc) |
| Estimated mass of the steel wire with 1 cm length and 4 mm diameter steel | 0.987216 | (g) |

| **Surface Oxide Thickness (µm)** | **Volume of Oxide (cc)** | **Estimated Mass of Surface Oxide (g)** |
|---|---|---|
| 1.32 | 0.000165737 | 0.000807141 |
| 1.77 | 0.000222214 | 0.00108218 |
| 2.17 | 0.000272404 | 0.001326608 |
| 3.53 | 0.000442977 | 0.002157297 |
| 1.66 | 0.000208409 | 0.001014954 |

**TABLE 7. Estimated Mass of Surface Oxide Based on 5.99 g/cc Density Assumption**

| | | |
|---|---|---|
| Density of oxide | 5.99 | (g/cc) |
| Assumed Length of oxide | 1 | (cm) |
| Density of steel | 7.86 | (g/cc) |
| Assumed Length of steel | 1 | (cm) |
| Estimated volume of the steel wire with 1 cm length and 4 mm diameter | 0.1256 | (cc) |
| Estimated mass of the steel wire with 1 cm length and 4 mm diameter steel | 0.987216 | (g) |

| **Surface Oxide Thickness (µm)** | **Volume of Oxide (cc)** | **Estimated Mass of Surface Oxide (g)** |
|---|---|---|
| 1.32 | 0.000165737 | 0.000992766 |
| 1.77 | 0.000222214 | 0.00133106 |
| 2.17 | 0.000272404 | 0.001631701 |
| 3.53 | 0.000442977 | 0.002653431 |
| 1.66 | 0.000208409 | 0.001248373 |

### Additional Examples

1. A consumable welding wire, comprising:
   a base wire comprising a steel composition; and
   a coating comprising an iron oxide surrounding the base wire, wherein the iron oxide has an oxygen to iron atomic concentration ratio (O/Fe) such that an outer surface of the welding wire has a dark gray to black color.
2. The consumable welding wire of Embodiment 1, wherein the O/Fe is such that the welding wire has a substantially black color.
3. The consumable welding wire of Embodiments 1 or 2, wherein the O/Fe is between 1.37 and 1.5.
4. The consumable welding wire of any one of the preceding Embodiments, wherein the iron oxide comprises one or both of hematite (Fe₂O₃) and magnetite (Fe₃O₄).
5. The consumable welding wire of any one of the preceding Embodiments, wherein the iron oxide essentially consists of magnetite.
6. The consumable welding wire of any one of preceding Embodiments, wherein the iron oxide is an oxide directly contacting the surface of the base wire.
7. The consumable welding wire of any one of the preceding Embodiments, wherein the iron oxide is an oxide formed by oxidizing a surface of the base wire.
8. The consumable welding wire of any one of the preceding Embodiments, wherein the consumable welding wire does not include a copper coating formed over the surface of the base wire.
9. The consumable welding wire of any one of the preceding Embodiments, further comprising a corrosion inhibiting oil coating the coating comprising the iron oxide.
10. The consumable welding wire of any one of the preceding Embodiments, wherein the coating has a thickness between about 1 µm and about 4 µm.
11. A method of fabricating a consumable welding wire, the method comprising: providing a base wire comprising a steel composition; and forming a coating comprising an iron oxide surrounding the base wire, wherein the iron oxide has an oxygen to iron atomic concentration ratio (O/Fe) such that an outer surface of the welding wire has a dark gray to black color.
12. The method of Embodiment 11, wherein the O/Fe is such that the welding wire has a substantially black color.
13. The method of Embodiments 11 or 12, wherein the O/Fe is between 1.37 and 1.5.
14. The method of any one of Embodiments 11-13, wherein forming the coating comprises oxidizing the core wire.
15. The method of any one of Embodiments 11-14, wherein forming the coating comprises immersing the core wire in a solution comprising one or more of a metal hydroxide, a metal nitrite or a metal nitrate.
16. The method of any one of Embodiments 11-15, wherein forming the coating comprises immersing the core in a solution comprising one or more of a sodium hydroxide, a sodium nitrite, a potassium nitrite, a sodium nitrate or a potassium nitrate.
17. The method of any one of Embodiments 11-16, wherein forming the coating comprises immersing the core in a solution comprising 60-80% sodium hydroxide and 15-40% sodium/potassium nitrite/nitrate.
18. The method of any one of Embodiments 14-17, wherein forming the coating comprises oxidizing at a temperature of about 100-200 °C.
19. The method of any one of Embodiments 14-18, wherein forming the coating comprises oxidizing at a temperature of about 130-150 °C.
20. The method of any one of Embodiments 14-19, wherein forming the coating comprises oxidizing for 1 min to 1 hour.
21. The method of any one of Embodiments 14-20, wherein after forming the coating, rinsing in water.
22. The method of any one of Embodiments 11-14, wherein forming the coating comprises thermally oxidizing the base wire at a temperature of 100-1400°C.
23. The method of Embodiment 22, wherein thermally oxidizing comprises convection heating the base wire.
24. The method of Embodiment 22, wherein thermally oxidizing comprises inductive heating the base wire.
25. The method of any one of Embodiments 11-24, further comprising forming a sealing around the coating, wherein the sealing comprises a corrosion inhibiting oil.
26. The method of any one of Embodiments 11-24, wherein the coating has a thickness between about 1 µm and about 4 µm.
27. A method of welding, comprising:
   providing a consumable welding wire according any one of Embodiments 1-10; and
   forming a weld comprising feeding the welding wire at a wire feeding speed between 50 min/min and 130 in/min.
28. The method of Embodiment 27, wherein forming the weld comprises forming at a voltage between 28V and 42V.
29. The method of Embodiments 27 or 28, wherein forming the weld comprises forming at a current between 500A and 1200A.

Unless the context clearly requires otherwise, throughout the description and the claims, the words "comprise," "comprising," "include," "including" and the like are to be construed in an inclusive sense, as opposed to an exclusive or exhaustive sense; that is to say, in the sense of "including, but not limited to." The word "coupled", as generally used herein, refers to two or more elements that may be either directly connected, or connected by way of one or more intermediate elements. Likewise, the word "connected", as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the above Detailed Description using the singular or plural number may also include the plural or singular number, respectively. The word "or" in reference to a list of two or more items, that word covers all of the following interpretations of the word: any of the items in the list, all of the items in the list, and any combination of the items in the list.

Moreover, conditional language used herein, such as, among others, "can," "could," "might," "may," "e.g.," "for example," "such as" and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or whether these features, elements and/or states are included or are to be performed in any particular embodiment.

While certain embodiments have been described, these embodiments have been presented by way of example only, and are not intended to limit the scope of the disclosure. Indeed, the novel apparatus, methods, and systems described herein may be embodied in a variety of other forms; furthermore, various omissions, substitutions and changes in the form of the methods and systems described herein may be made without departing from the spirit of the disclosure. For example, while blocks are presented in a given arrangement, alternative embodiments may perform similar functionalities with different components and/or circuit topologies, and some blocks may be deleted, moved, added, subdivided, combined, and/or modified. Each of these blocks may be implemented in a variety of different ways. Any suitable combination of the elements and acts of the various embodiments described above can be combined to provide further embodiments. The various features and processes described above may be implemented independently of one another, or may be combined in various ways. All possible combinations and subcombinations of features of this disclosure are intended to fall within the scope of this disclosure.

**REFERENCE NUMERALS:**

| | | | |
|---|---|---|---|
| 10 | system | 70 | table |
| 12 | power source | 71 | frame |
| 14 | wire drive assembly | 72 | rail |
| 16 | shielding gas supply system | 900 | method |
| 18 | cable assembly | 910 | step |
| 20 | workpiece | 920 | step |
| 22 | reel stand | 930 | step |
| 24 | spool | 940 | step |
| 26 | drive mechanism | 950 | step |
| 28 | shield gas source | 960 | step |
| 30 | conduit | 970 | step |
| 32 | cable | | |
| 34 | weld gun | | |
| 36 | conduit | A | wire |
| 38 | cable | B | wire |
| 48 | sheath | C | wire |
| 50 | welding wire | | |
| 52 | drive roller | SMAW | shielded metal arc welding |
| 54 | arc | GMAW | gas metal arc welding |
| 56 | workpiece | MIG | metal inert gas |
| 58 | weld | FCAW | flux-cored arc welding |
| 60 | flux | MCAW | metal cored arc welding |
| 62 | welding wire | SAW | submerged arc welding |
| 64 | supply spool | DCEP | direct current electrode positive |
| 66 | supply assembly | DCEN | direct current electrode negative |
| 68 | weld gun | AC | alternating current |

## Claims

1. A consumable welding wire, comprising:
a base wire comprising a steel composition; and
a coating;
**characterized in that** the coating comprises an iron oxide surrounding the base wire, wherein the iron oxide has an oxygen to iron atomic concentration ratio (O/Fe) such that an outer surface of the welding wire has a dark gray to black color.

2. The consumable welding wire of Claim 1, wherein the O/Fe is such that the outer surface of the welding wire has a substantially black color.

3. The consumable welding wire of Claim 1 or 2, wherein the O/Fe is between 1.37 and 1.5.

4. The consumable welding wire of one of the Claims 1 to 3, wherein the iron oxide comprises one or both of hematite (Fe₂O₃) and magnetite (Fe₃O₄).

5. The consumable welding wire of one of the Claims 1 to 4, wherein the iron oxide essentially consists of magnetite (Fe₃O₄).

6. The consumable welding wire of one of the Claims 1 to 5, wherein the iron oxide is an oxidized portion of the base wire.

7. The consumable welding wire of one of the Claims 1 to 6, wherein the consumable welding wire does not include a copper coating formed over the surface of the base wire.

8. The consumable welding wire of one of the Claims 1 to 7, further comprising a corrosion inhibiting oil coating the coating comprising the iron oxide.

9. The consumable welding wire of one of the Claims 1 to 8, wherein the coating has a thickness between about 1 µm and about 4 µm.

10. A method of fabricating a consumable welding wire, in particular according to one of the preceding claims, the method comprising:
providing a base wire comprising a steel composition; and
forming a coating surrounding the base wire,
**characterized in that** the coating comprises an iron oxide, wherein the iron oxide has an oxygen to iron atomic concentration ratio (O/Fe) such that an outer surface of the welding wire has a dark gray to black color.

11. The method of Claim 10, wherein the O/Fe ratio is such that the outer surface of welding wire has a substantially black color; and/or wherein the O/Fe ratio is between 1.37 and 1.5.

12. The method of Claim 10 or 11, wherein forming the coating comprises chemically oxidizing the base wire, preferably by oxidizing the base wire in a solution at a temperature of about 100-200 °C; and/or wherein forming the coating comprises immersing the base wire in a solution comprising one or more of a metal hydroxide, a metal nitrite or a metal nitrate; and/or wherein forming the coating comprises immersing the base wire in a solution comprising one or more of a sodium hydroxide, a sodium nitrite, a potassium nitrite, a sodium nitrate or a potassium nitrate.

13. The method of one of the Claims 10 to 12, wherein forming the coating comprises immersing the base wire in a solution comprising 60-80 weight % comprising sodium hydroxide and 15-40 weight % comprising one or more of sodium nitrite, sodium nitrate, potassium nitrite and potassium nitrate.

14. The method of one of the Claims 10 to 13, further comprising forming a sealing around the coating, wherein the sealing comprises a corrosion inhibiting oil.

15. The method of one of the Claims 10 to 14, wherein the coating has a thickness between about 1 µm and about 4 µm; and/or wherein forming the coating comprises thermally oxidizing the base wire at a temperature of 100-1400°C.
